# EUROPEAN PATENT SPECIFICATION

(11) **EP 1 538 515 B1**
(45) Date of publication and mention of the grant of the patent: **03.03.2010**
(21) Application number: 03027856.8
(22) Date of filing: 04.12.2003
(51) Int. Cl.: G06F 3/02, G06F 3/033

(54) **Character key incorporating navigation control**
Alphanumerische Taste mit Navigationsteuerung
Touche alphanumérique avec contrôle de navigation

(43) Date of publication of application: 08.06.2005
(73) Proprietor: Research In Motion Limited, Waterloo, Ontario N2L 3W8 (CA)
(72) Inventor: Pletikosa, Velimir, Kitchener, Ontario N2L 1E9 (CA); Griffin, Jason T., Waterloo, Ontario N2T 2J5 (CA)
(74) Representative: Reichl, Wolfgang

(56) References cited:
- WO-A-02/35513
- US-A- 4 680 577
- US-A- 5 143 462
- US-A- 5 499 041
- US-A- 5 796 056
- US-A1- 2001 033 270

## Description

### BACKGROUND OF THE INVENTION

The present invention relates to on-screen navigation control for computer devices.

Compact electronic devices such as personal digital assistants (PDAs), cell phones, pagers, organizers and wireless mobile computing devices generally have limited surface area on which user input keys and buttons can be located. Devices having on-screen navigation typically have a plurality of keys dedicated to cursor or caret movement control. For example, right, left, up and down navigtion control keys are often grouped close together. Such devices may also include separate keys for character entry, for example a QWERTY style keyboard, or a telephone-keypad layout. The use of a large number of keys takes up valuable space on compact electronic devices, and can increase tooling and manufacturing costs.

Thus, there is a need for a keyboard configuration for a compact electronic device having reduced space requirements while at the same time is comfortable and efficient to use.
WO 02/35513 teaches a multi-function key assembly based on a popple dome switch configuration that comprises a central input position and a series of circumferential input positions distributed therearound, corresponding to the 9 input positions of a conventional telephone key pad. Alternatively, the multi-function key assembly may be used as a computer mouse.
US 4,680,577 discloses a finger tip sized, alpha-numeric character key, which can be moved in four directions in a lateral plane in order to move a cursor on a display.

### SUMMARY OF THE INVENTION

In an example of the invention a common key on a keyboard is used for both for both character entry and on-screen navigation for an electronic device.

According to one example of the invention is an electronic device including a display screen and a keyboard. The keyboard is coupled by a processor to the display screen and has a plurality of keys, including a combined character and navigation key having a plurality of detectable input positions including at least one character input position corresponding to a character input for a displayable character and at least one navigation control input position corresponding to a navigation control input for movement of a navigation indicator on the display screen. The combined character and navigation key provides tactile single click feedback to a user when the combined character and navigation key is moved to any of the input positions.

According to another example of the invention is a hand-held electronic device that includes a display screen, a keyboard mounted within a face of the device and comprising a plurality of alphanumeric keys arranged in a plurality of rows across the face between an upper edge and a bottom edge of the face, and a space bar key arranged closer to bottom edge of the face than the alphanumeric keys for inputting a space character for display on the display screen, the space bar key including a navigational input component for moving a navigation indicator on the display screen. The device includes a processor for controlling the hand-held device. The processor is coupled to the keyboard for receiving input signals therefrom and is operatively coupled to the display screen.

### BRIEF DESCRIPTION OF THE DRAWINGS

Embodiments of the present invention will now be described, by way of example only, with reference to the attached Figures, wherein:

Figure 1 is a block diagram of a mobile device and a communications system to which embodiments of the present invention may be applied;

Figure 2 is a front or plan view of a mobile device according to example embodiments;

Figure 3 shows a further visual user interface as displayed on a display screen of the device of Figure 2;

Figure 4a to 4c are partial sectional side views of a space bar key and associated switches of the device of Figure 2 in various states according to one example embodiment of the invention;

Figure 5a to 5c are partial sectional side views of a space bar key and associated switches in various states according to another example embodiment of the invention;

Figure 6a to 6c are partial sectional side views of a space bar key and associated switches in various states according to yet another example embodiment of the invention;

Figure 7 is a front or plan view of a mobile device according to another example embodiment;

Figure 8 is a partial sectional side view taken along the lines viii-viii of Figure 7; and

Figure 9 is a partial sectional side view taken along the lines ix-ix of Figure 7.

Like reference numerals are used throughout the Figures to denote similar elements and features.

### DETAILED DESCRIPTION

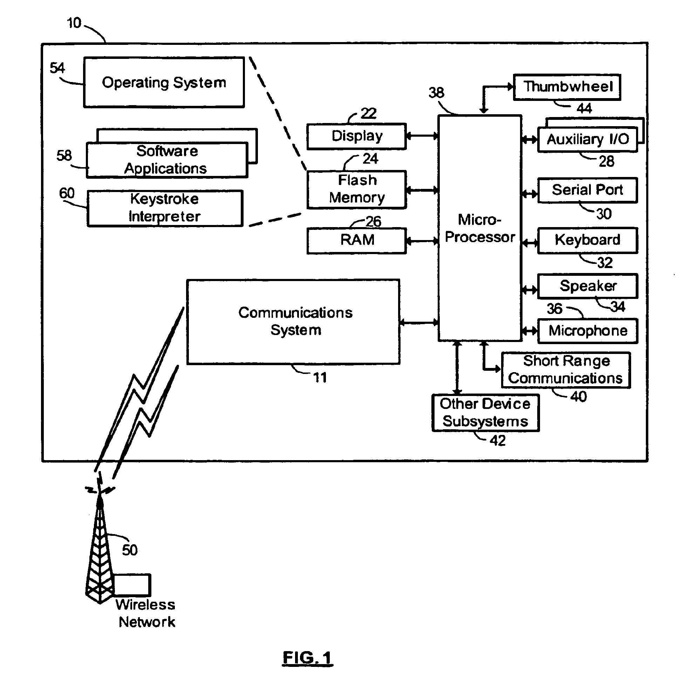

Referring to Figure 1, there is a block diagram of a mobile device 10 to which example embodiments of the present invention may be applied. In one example embodiment, the mobile device 10 is a hand-held two-way mobile communication device 10 having at least data and possibly also voice communication capabilities. In an example embodiment, the device has the capability to communicate with other computer systems on the Internet. In various embodiments, mobile device 10 is a data communication device, a multiple-mode communication device configured for both data and voice communication, a mobile telephone, a PDA (either enabled or not enabled for wireless communications), 1-way or 2-way pagers and/or any type of mobile electronic device having a keyboard or keypad and on-screen display. In the presently described embodiment, the mobile device 10 is configured to operate within a wireless network 50.

The device 10 includes a communication subsystem 11. As will be apparent to those skilled in the field of communications, the particular design of the communication subsystem 11 will be dependent upon the communication network in which the device is intended to operate. Wireless mobile network 50 is, in an example embodiment, a wireless packet data network, which provides radio coverage to mobile devices 10, although it could be any other types of wireless networks.

The device 10 includes a microprocessor 38 that controls the overall operation of the device. The microprocessor 38 interacts with communications subsystem 11 and also interacts with further device subsystems such as the display 22, flash memory 24, random access memory (RAM) 26, auxiliary input/output (I/O) subsystems 28, thumbwheel 44, serial port 30, keyboard or keypad 32, speaker 34, microphone 36, a short-range communications subsystem 40, and any other device subsystems generally designated as 42.

Some of the subsystems shown in Fig. 1 perform communication-related functions, whereas other subsystems may provide "resident" or on-device functions. Notably, some subsystems, such as keyboard 32 and display 22 for example, may be used for both communication-related functions, such as entering a text message for transmission over a communication network, and device-resident functions such as a calculator or task list.

Operating system software 54 and various software applications 58 used by the microprocessor 38 are, in one example embodiment, stored in a persistent store such as flash memory 24 or similar storage element. Those skilled in the art will appreciate that the operating system 54, specific device applications 58, or parts thereof, may be temporarily loaded into a volatile store such as RAM 26. It is contemplated that received communication signals may also be stored to RAM 26.

The microprocessor 38, in addition to its operating system functions, preferably enables execution of software applications 58 on the device. A predetermined set of applications 58 which control basic device operations, including at least data and voice communication applications for example, will normally be installed on the device 10 during manufacture. Further applications may also be loaded onto the device 10 through the network 50, an auxiliary I/O subsystem 28, serial port 30, short-range communications subsystem 40 or any other suitable subsystem 42, and installed by a user in the RAM 26 or a non-volatile store for execution by the microprocessor 38. Such flexibility in application installation increases the functionality of the device and may provide enhanced on-device functions, communication-related functions, or both. For example, secure communication applications may enable electronic commerce functions and other such financial transactions to be performed using the device 10.

In a data communication mode, a received signal such as a text message or web page download will be processed by the communication subsystem 11 and input to the microprocessor 38, which will preferably further process the received signal for output to the display 22, or alternatively to an auxiliary I/O device 28. A user of device 10 may also compose data items such as email messages for example, using the keyboard 32 in conjunction with the display 22 and possibly an auxiliary I/O device 28. Such composed items may then be transmitted over a communication network through the communication subsystem 11.

The serial port 30 in Fig. 1 would normally be implemented in a personal digital assistant (PDA)-type communication device for which synchronization with a user's desktop computer (not shown) may be desirable, but is an optional device component. Such a port 30 would enable a user to set preferences through an external device or software application and would extend the capabilities of the device by providing for information or software downloads, including user interface information, to the device 10 other than through a wireless communication network.

A short-range communications subsystem 40 is a further component which may provide for communication between the device 10 and different systems or devices, which need not necessarily be similar devices. For example, the subsystem 40 may include an infrared device and associated circuits and components or a Bluetooth™ communication module to provide for communication with similarly enabled systems and devices.

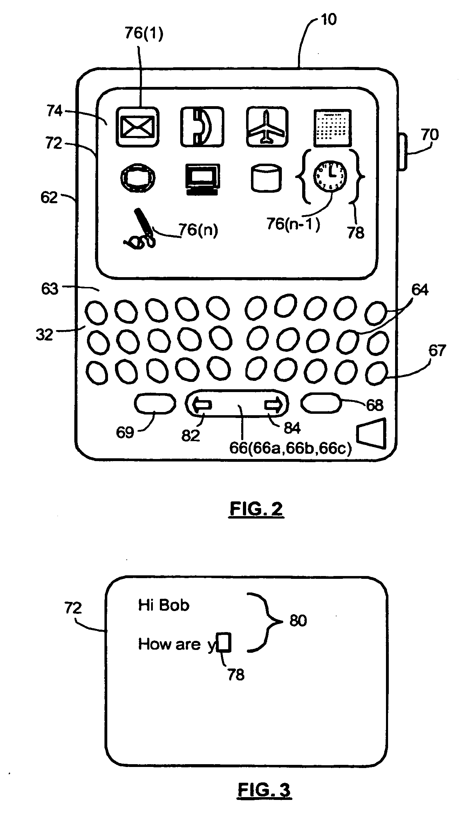

With reference to Figure 2, in an example embodiment, the components and subsystems of mobile device 10 are housed within a rigid case 62 that is configured to be held with one or two hands while the device 10 is in use. The mobile device 10 is, in various example embodiments, small enough to fit inside a standard purse or suit jacket pocket. In an example embodiment, the keyboard 32 is horizontally positioned symmetrically between a left edge and a right edge of a face 63 of the device 10. The keyboard 32 includes character input buttons or keys for user input of displayable characters, such as substantially similarly sized alphanumeric buttons or keys 64 and a larger elongated space bar button or key 66. The keyboard 32 also includes non-alphanumeric command or control buttons or keys such as line feed or enter key 67, CAP key 68 and CTRL key 69. In the example embodiment of Figure 2, the keys on the face of device 10 are positioned to be actuated by the thumbs of the user while the back of the device 10 is supported by the fingers of the user. In one example embodiment, alphanumeric keys 64 and space bar key 66 are arranged in a QWERTY-style or Dvorak-style keyboard having the plurality of alphanumeric keys 64 arranged in a plurality of rows across the face 63 of case 62, with the elongate space bar key 66 centrally located below the last row of alphanumeric keys 64. Alternative keyboard layouts and configurations are used in other embodiments of device 10. Thumbwheel system 44 includes a rotate-able and push-able thumbwheel 70.

With reference to Figure 1, among the software applications or modules resident on device 10 is a keystroke interpreter 60 that maps various inputs received by the microprocessor 38 from keyboard system 32 and thumbwheel system 44 to associated character and control codes and provides such codes to the operating system 54 and/or software applications 58. In various embodiments, the functions of the keystroke interpreter may be partly or completely integrated into the operating system 54 or other software applications 58.

With reference again to Figure 2, the display system 22 of the device 10 includes a display screen 72 that is vertically positioned between the keyboard 32 and a top edge of the device face and horizontally positioned symmetrically between the left edge and the right edge of the device face. In various alternative embodiments, the display screen 72 may be housed in a casing that is pivotally mounted to the casing housing the keyboard, or the keyboard may be divided into two sections in housing case 62 with the display screen being located between the keyboard sections.

A visual user interface 74 is generated on display screen 72 by microprocessor 38 under the control of operating system 54 and/or software applications 58. The visual user interface 74 of Figure 2 illustrates an example client screen in which a plurality of menu items 76 such as application icons 76(1) to 76(n) (referred to generically herein by reference 76) are displayed, each of which is selectable to launch an associated application. An on-screen position indicator 78, commonly referred to as a caret or cursor, scrolls through the menu items 76 in response to manipulation of a navigation key or keys by the user. When a menu item is highlighted or focussed by the on-screen indicator 78, a further predetermined user input (for example pressing thumbwheel 70 or other selection key) results on the associated application being linked to or launched.

Different visual user interface screens will generally be associated with the different software applications 58 resident on device 10. For example, Figure 3 shows a text entry mode user interface on display screen 72 that could be associated with an email compose application or other application that has a text entry mode. In such visual user interface, cursor or on-screen indicator 78, provides visual feedback as to the current input location in the text field. The on-screen position indicator 78 scrolls through the characters of the text field 80 in response to manipulation of a navigation key or keys by the user.

According to example embodiments of the mobile device 10, a multifunction key having multiple input positions is used both for character input and for on-screen navigation. For example, in various embodiments an elongate space bar key 66 of keyboard system 32 is used both for inputting a space character and also for on-screen navigation. Space bar key 66 is referred to generically by reference 66 herein, with specific example embodiments being denoted by references 66a, 66b, 66c and 66d throughout. With reference to Figure 2, the space bar key 66 and device 10 are configured so that: (a) pressing down on the left side 82 of the space bar key 66 while simultaneously pressing a further predetermined command key (for example ALT key 68) is mapped to a "left arrow" or "scroll back" control code by the keyboard interpreter; (b) pressing down on the right side 84 of the space bar key 66 while simultaneously pressing the further predetermined key is mapped to a "right arrow" or "scroll forward" control code; and (c) pressing down anywhere on the space bar key while in a text entry mode independently of pressing the further predetermined key is mapped to a "space" character.

By way of example, and with reference to the text entry mode user interface display shown in Figure 3, depressing the left side 82 of the space bar 66 while depressing ALT key 68 results in visual indicator 78 scrolling backwards to the left through text field 80 (with wraparound to the end of the previous line when the beginning of a current line of text is reached), and depressing the right side 84 while depressing ALT key 68 causes the visual indicator 78 to scroll forward to the right through text field 80 (with wraparound to the front of the next line when the end of current line of text is reached). Depressing the space bar in any location without also pressing the ALT key 68 results in a "space" character being added to the text field at the location of the on-screen indicator 78 and the on-screen indicator 78 being advanced to the next location in the text field. If a key or key combination is pressed for more than a predetermined duration, the control code or character mapped to the key or key combination is repeatedly generated until the key or key combination is released or a buffer size exceeded.

In addition to permitting navigation through a text field when the device 10 is in a text input mode (as shown in Figure 3), in various embodiments the spacebar 66 can also be used to navigate through menu item selection screens (such the icon screen shown in Figure 2) when the device 10 is in a selection mode. For example, in one embodiment, pressing of the left side 82 of the space bar key 66 while pressing alt key 68 allows the user to scroll to the left and backwards through the selectable icons shown on the screen 72 in Figure 2, while pressing the right side 84 of the space bar key 66 while pressing alt key 68 allows the user to scroll to the right and forwards through the selectable icons. In interfaces displaying a column or vertical list of selectable items, pressing of the left side 82 of the space bar key 66 while pressing alt key 68 allows the user to scroll upwards and backwards through the menu items, while pressing the right side 84 of the space bar key 66 while pressing alt key 68 allows the user to scroll downwards and forwards through the menu items.

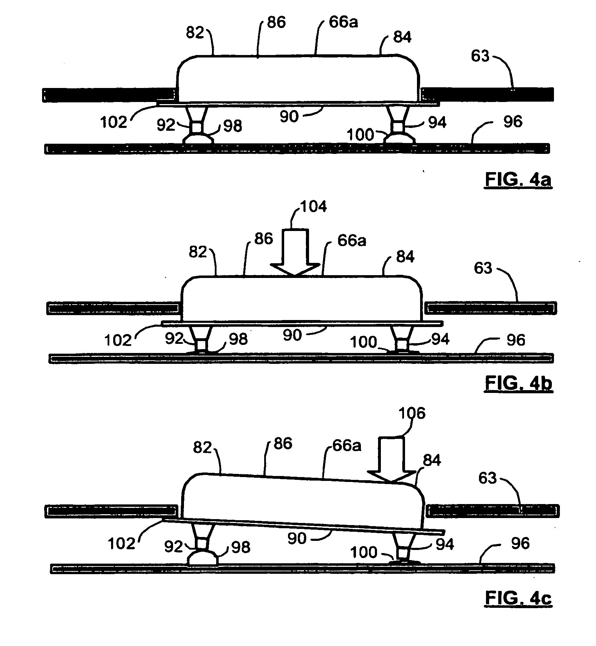

Figures 4a to 4c show a sectional side view of a space bar key 66a according to one example embodiment of the invention. The space bar key 66a includes an upper user contact portion 86 that protrudes through an opening in the face 63 of rigid housing case 62. A lower surface 90 of the space bar key 66a inside the rigid case 62 faces a printed circuit board 96 on which are mounted two resilient binary contact dome switches 98 and 100 that are part of the keyboard assembly 32. A first protuberance 92 extends from the lower surface 90 of the left side 82 of space bar 66a to rest on the first contact dome switch 98, and a second protuberance 94 extends from the lower surface 90 of the right side 84 of the space bar 66a to rest on the second contact dome switch 100. Figure 4a shows the space bar key 66a in a normal un-depressed state in which the resilient contact dome switches 98 and 100 bias a stop member 102 of the space bar key 66a against an inside surface of the face 63 of the case 62. Figure 4b shows the space bar key 66a in a uniformly depressed state where pressure is applied to the center of upper portion 86 as indicated by arrow 104. In such state, both contact dome switches 98, 100 are pressed and thus in an opposite binary state than in Figure 4a. Figure 4c shows the space bar key 66a when only the right side 84 of the key 66a is depressed through pressure applied as indicated by arrow 106, resulting in compression of contact dome switch 100, but not contact dome switch 98. Similarly, contact dome switch 98 can be individually compressed by applying pressure only to the left side 82 of key 66. Thus, in the configuration shown in Figures 4a-4c, depression of first contact dome switch 98 together with the ALT key 68 but independent of the second contact dome switch 100 is mapped by keystroke interpreter 60 to a left arrow or backward movement control code and the on-screen indicator 78 moved accordingly, the independent depression of the second contact dome 100 together with the ALT key 68 is mapped to a right arrow or forward movement control code and the on-screen indicator 78 moved accordingly. In a text input mode, the depression of either or both of the contact dome switches 98, 100 in the absence of depression of the ALT key 68 is mapped to a space character input.

In one embodiment having the configuration shown in Figures 4a-4c, the contact dome switches 98, 100 are resilient members that bias the key 66a outward into its normal un-depressed state when no user pressure is applied to the key. Such switches each provide a tactile "click" feel feedback to the user when depressed. Thus, pressing the center of the key 66a of Figures 4a-4c provides a "double click" tactile feel as two contact domes switches are activated, and pressing of either of the right and left sides provides a "single click" tactile feel as only one contact dome switch is activated.

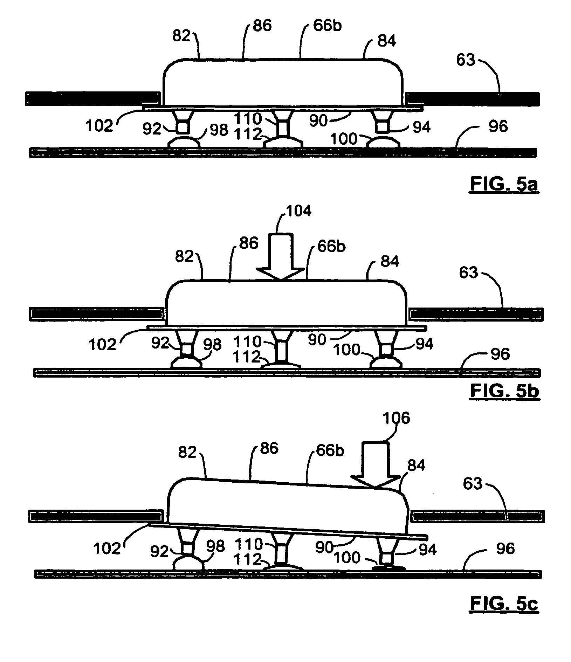

In various example embodiments, different space bar key and switch configurations are used to provide on-screen navigation control. For example, Figures 5a to 5c show an alternative example embodiment of space bar key 66b for the mobile device 10 of Figure 2 in which a third central protuberance 110 extends from the bottom 90 of the space bar key 66b to pivotally engage a third resilient contact dome switch 112. The third protuberance 110 is centrally located on the space bar key between left and right side protuberances 92 and 94, and the dome switch 112 has a corresponding location on circuit board 96 between dome switches 98 and 100. In the example embodiment of Figures 5a-5c, the central third protuberance 110 extends further from the key bottom 90 then the side first and second protuberances 92,94 so that only the central protuberance 110 contacts its respective dome switch 112 when the space bar key is in its normal resting position as shown in Figure 5a. Alternatively or additionally, the central contact switch 112 can extend further from the circuit board 96 than the side contact switches 98, 100.

Thus, in the embodiment of Figures 5a-5c, the central contact dome switch 112 provides a biasing force against the central protuberance 110 keeping the space bar key in its normal resting position biased against the case 62. When the center of the space bar key 66b is pressed, as shown in Figure 5b, the central dome contact switch 112 has its binary state changed as it is compressed out of its normal position, but the side contact switches 98 and 100 are not compressed. Such a configuration allows the user to feel the tactile feedback "click" of only a single contact dome switch when the center of the space bar key 66b is pressed, rather than the "double click" tactile feel that results from the double contact dome switch activation associated with pressing the center of the space bar key 66a of Figures 4a-4c.

Turning again to Figure 5c, when the right side 84 of the space bar key 66b is pressed the central protuberance 110 pivots on, compresses and activates central dome contact switch 112, the right side protuberance 94 compresses and activates its respective contact dome switch 100, and the left side contact dome switch 98 is not activated. Similarly, when the left side 82 of the space bar key 66b is pressed the central protuberance 110 pivots on, compresses and activates central dome contact switch 112, the left side protuberance 92 compresses and activates its respective contact dome switch 98, and the right side contact dome switch 100 is not activated. Thus, pressing either side of the space bar key results in pivoting of the key in the corresponding direction and a tactile "double click" feel.

In one example embodiment of the configuration shown in Figures 5a-5c, depression of first contact dome switch 98 and the central contact dome switch 112 together with the ALT key 68 but independent of the second contact dome switch 100 is mapped by keystroke interpreter 60 to a left or forward movement control code resulting in a corresponding movement of the on-screen indicator 78. The depression of the second contact dome switch 100 and the central contact dome switch 112 together with the ALT key 68 is mapped to an right or backward movement control code resulting in a corresponding movement of the on-screen indicator 78. In a text input mode, the depression of the central contact dome switch 112, either on its own or in combination with either of the side contact dome switches 98, 100, but independent of the alt key 68, is mapped to a space character input.

In will be appreciated that contact switches that provide tactile "click" feedback can be constructed in a variety of ways. The "click" feel results from resistance being provided by the switch against the key throughout its depression until it hits a point of maximum depression. Such tactile "click" feel is provided by contact dome switches mounted on the circuit board. In alternative embodiments, other switch configurations can be used - for example, the tactile "click" feedback can be provided by individual coil springs as in conventional computer keyboards. In another example embodiment, a resilient web may be positioned between the keys 64, 66 and 68 of the keyboard system 32, with electrical contact switches being located under corresponding portions of the web that can be momentarily displaced by a respective key protuberance to activate the electrical contact switch, after which the web biases the key back to a normal resting position. In some embodiments, the keys may be integrated right into such a web.

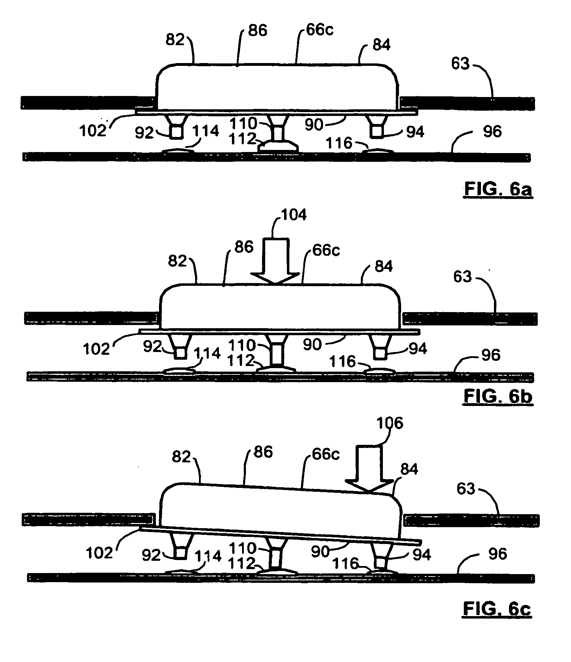

Figures 6a-6c show yet another example embodiment of a space bar key 66c and switch configuration that can be used in the device 10 of Figure 2. Figure 6a shows the space bar key in a normal biased resting state, Figure 6b shows the space bar key when pressed in the center, and Figure 6b shows the space bar key when pressed on the right side. The space bar key 66c is substantially identical space bar key 66b to that of Figures 5a-6a, however first and second side resilient contact dome switches 98 and 100 have been replaced with non-click contact switches 114 and 116 that do not have compressible resilient domes and hence do not provide tactile "click" feedback when activated. Rather, the switches 114 and 116 simply provide a hard stop when activated. Tactile "single click" feedback is provided by central contact dome switch 112 regardless of where the space bar key 66c is pressed.

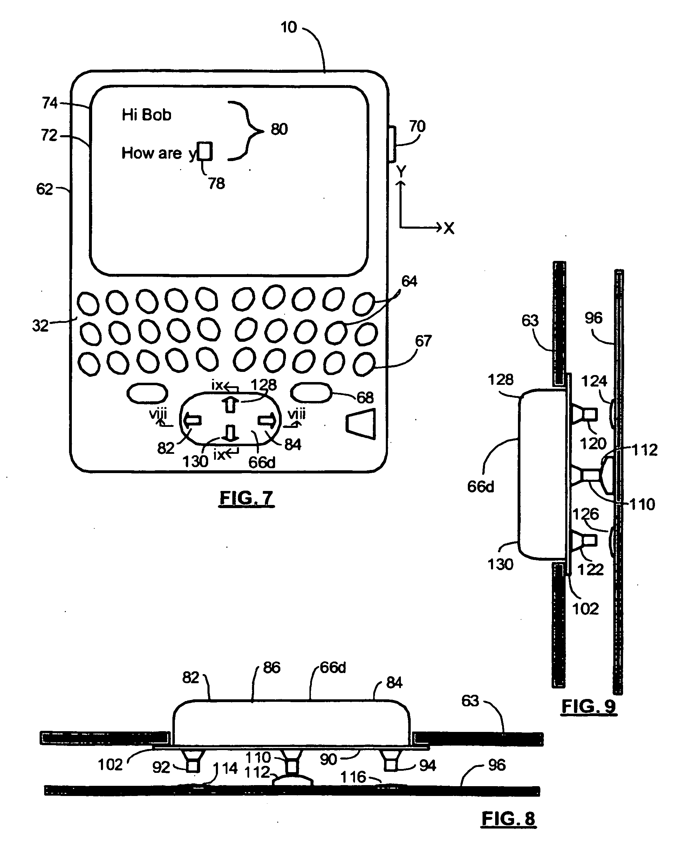

Figures 7 to 9 illustrate a further example embodiment in which a space bar key 66d can be used to control vertical (Y-axis) on-screen navigation as well as horizontal (X-axis) on-screen navigation. The embodiment of Figures 7 to 9 is similar to the embodiment of Figures 2 and 6a―6c, with the exception of differences that will be explained below. The space bar key 66d is larger than space bar key 66c to provide for pressable up and down regions 128, 130 for corresponding y-axis navigation of on-screen indicator 78. As best seen in Figure 8, similar to space bar key 66c, the space bar key 66d includes a central protuberance 110 mounted to pivotally engage a central contact dome switch 112, and left and right protuberances 92, 94 for respectively activating first and second contact switches 114 and 116. However, as best seen in Figure 9, the space bar key 66d also includes upper and lower protuberances 120, 122, under upper and lower space bar key regions 128, 130, respectively, for activating respective upper and lower contact switches 124 and 126. The upper and lower protuberances 120 and 122 and their respective contact switches 124 and 126 are dimensioned so that the protuberances 120 and 122 engage the contact switches 124 and126 when the space bar key 66D is pivoted by pressing its upper region 128 or its lower region 130, respectively.

In the example embodiment of Figures 7 to 9, activation of first contact switch 114 and the central contact dome switch 112 together with the ALT key 68 but independent of the second contact switch 116 is mapped by keystroke interpreter 60 to a left arrow or negative X movement control code resulting in a corresponding movement of the on-screen indicator 78. The activation of the second contact switch 116 and the central contact dome switch 112 together with the ALT key 68 is mapped to an right arrow or positive X movement control code resulting in a corresponding movement of the on-screen indicator 78. The activation of the upper contact switch 124 and the central contact dome switch 112 together with the ALT key 68 is mapped to an up arrow or positive Y movement control code resulting in a corresponding movement for on-screen indicator 78. The activation of the lower contact switch 126 and the central contact dome switch 112 together with the ALT key 68 is mapped to a down arrow or negative Y movement control code resulting in a corresponding movement of on-screen indicator 78. In a text entry mode of device 10, depression of the central contact dome switch 112 without simultaneous depression of the ALT key 68 results in entry of a "space" character regardless of what other switches are also activated by the space bar key 66d. In various embodiments, various switch activation combinations may be mapped to further on-screen navigation control codes. For example, simultaneous activation of the left contact switch 114 and the upper contact switch 124 together with the ALT key 68 is, in one embodiment mapped to a control code that results in diagonal movement in the negative X, negative Y direction of on-screen indicator 78. In such embodiment, simultaneous activation of other key combinations also results in on-screen diagonal movement that corresponds to the region of space bar key 66d that is pressed. In some embodiments, left and right contact switches 114 and 116 may be omitted and space bar key 66d limited to up and down cursor control. In the embodiment illustrated in Figures 8 and 9, "tactile click" central contact dome switch 112 is activated by central protuberance 110 when any region of the key 66d is depressed, providing single click tactile feedback to the user. In such example embodiment, and contact switches 114, 116, 124 and 126 are not resilient dome switches and thus do not provide tactile click feedback when activated. Thus, as with key 66c, the user of key 66d feels a single click tactile feedback regardless of where key 66d is pressed.

In various embodiments, one or more control or command keys other than the ALT key could be used to activate the navigational features of the space bar 66. In some operational modes in some embodiments, simultaneous depression of an additional key such as the ALT key may not be required to use the space bar key 66 as a navigation tool, for example, in a non-text entry mode such as menu item selection mode where space character entry is not needed. In some examples, even in a text-input mode, manipulation of the space bar key 66 alone is sufficient for both space character entry and on-screen navigation control - for example, in one alternative example implemented using space bar key 66A, in a text-entry mode, even in the absence of depression of ALT key 68, activation of both left and right switches 98 and 100 simultaneously results in a space character input, independent activation of left switch 98 in a move cursor left input, and independent activation of right switch 100 in a move curser right input.

The use of the space bar key as both a space character input key and as a navigational control key is useful in some embodiments as the space bar key is traditionally a larger and more visibly prominent key on a keyboard. However, in some examples, navigation control may be combined with a further character input key other than or in addition to the space bar key.

The above-described embodiments of the present invention are intended to be examples only. Alterations, modifications and variations may be effected to the particular embodiments by those skilled in the art without departing from the scope of the invention, which is defined by the claims appended hereto.

## Claims

1. An electronic hand-held two-way mobile communication device comprising:
a display screen (72);
a QWERTY keyboard (32) coupled by a processor (38) to the display screen (72) and having a plurality of alphanumeric keys (64, 66), a command key (68, 69) and a space bar key as a combined character and navigation key (66);
the command key (68, 69) for sending a command input signal to the processor (38) while depressed in an activated position,
the combined character and navigation key (66) having a plurality of detectable input positions including at least two navigation control input positions corresponding to navigation control inputs for movement of a navigation indicator (78) on the display screen (72), the first input position obtained by pressing down on the left side of the combined character and navigation key (66) and the second input position obtained by pressing down the right side of the combined character and navigation key (66), the combined character and navigation key (66) providing tactile single click feedback to a user when the combined character and navigation key (66) is moved to any of the input positions,
wherein, in a text entry input mode, the processor (38) is programmed:
- for causing the navigation indicator (78) on the display screen (72) to move to the left direction when pressing down on the left side of the combined character and navigation key (66) while the command input signal is simultaneously received from the command key (68, 69),
- for causing the navigation indicator (78) on the display screen (72) to move to the right direction when pressing down on the right side of the combined character and navigation key (66) while the command input signal is simultaneously received from the command key (68, 69), and
- for causing the space character to be added to text displayed on the display screen (72) when the space bar key is in any of the detectable input positions and the command key is not simultaneously activated.

2. The electronic device according to claim 1 further comprising a third input position obtained by pressing down on an upper end of the combined character and navigation key (66) and a fourth input position obtained by pressing down on a lower end of the combined character and navigation key (66), wherein, in the text entry mode, the processor (38) is programmed:
- for causing the navigation indicator (78) on the display screen (72) to move in the upward direction when pressing down on the upper end of the combined character and navigation key (66) while the command input signal is simultaneously received from the command key (68, 69), and
- for causing the navigation indicator (78) on the display screen (72) to move in the downward direction when pressing down on the lower end of the combined character and navigation key (66), while the command input signal is simultaneously received from the command key (68, 69).

3. The electronic device according to one of the claims 1 to 2 wherein the device includes a housing (62) having a face (63) in which the keyboard (32) is mounted, the keys including a plurality of alphanumeric keys (64) corresponding to alphanumeric character inputs, the alphanumeric keys being arranged in a plurality of rows across the face, the space bar key (66) being elongated relative to the alphanumeric keys and positioned on the face below the alphanumeric keys.

4. The electronic device of claim 3 wherein the electronic device is a hand-held device and the display screen (72) is mounted within the face (63).

5. The electronic device according to one of the claims 1 to 4 wherein the keyboard (32) includes a resilient member (112) acting in response to movement of the combined character and navigation key (66) to any of the input positions for providing the tactile single click feedback to a user.

6. The electronic device of claim 5 wherein the keyboard (32) includes a plurality of switches (112, 114, 116) disposed on a printed circuit board (96) adjacent the character and navigation key (66) for detecting movement of the character and navigation key (66) to the input positions, the plurality of switches including at least first and second switches (114, 116) and a central switch (112) located between the first and second switches, the character and navigation key (66) being displaceable towards the printed circuit board (96) and pivotally mounted relative to the central switch (112) for activating the first switch (114) and the central switch (112) independently of the second switch (116) when a first peripheral region of the character and navigation key (66) is pressed and activating the second switch (116) and central switch (112) independently of the first switch when a second peripheral region of the character and navigation key (66) is pressed.

7. The electronic device according to claim 6 wherein the central switch (112) includes the resilient member and the other switches (114, 116) provide substantially no biasing force against the character and navigation key (66).

8. The electronic device according to one of the claims 6 to 7 wherein the central switch (112) is a dome switch for biasing the character and navigation key (66) into a resting position, the other switches (114, 116) being non-dome contact switches spaced apart from respective contact areas of the character and navigation key (66) when the character and navigation key (66) is in the resting position, the central switch (112) providing single click tactile feedback when depressed by the character and navigation key (66) in any of the input positions.

9. The electronic device according to one of the claims 6 to 8 wherein the plurality of switches includes third and fourth switches (124, 126), the first, second, third and fourth switches being symmetrically positioned about the central switch (112), the character and navigation key (66) being displaceable for activating the third switch (124) and the central switch (112) independently of the fourth switch (126) when a third peripheral region of the character and navigation key (66) is pressed and activating the fourth switch (126) and central switch (112) independently of the third switch (124) when a fourth peripheral region of the character and navigation key (66) is pressed.

## Patentansprüche

1. Elektronische handgehaltene bzw. tragbare mobile Zweiweg-Kommunikationsvorrichtung, die aufweist:
einen Anzeigebildschirm (72);
eine QWERTY-Tastatur (32), die durch einen Prozessor (38) mit dem Anzeigebildschirm (72) verbunden ist und eine Vielzahl von alphanumerischen Tasten (64, 66), eine Befehlstaste (68, 69) und eine Leerzeichentaste als eine kombinierte Zeichen- und Navigationstaste (66) aufweist;
wobei die Befehlstaste (68, 69) zum Senden eines Befehlseingabesignals an den Prozessor (38) vorgesehen ist, während in einer aktivierten Position gedrückt,
wobei die kombinierte Zeichen- und Navigationstaste (66) eine Vielzahl von erfassbaren Eingabepositionen aufweist, einschließlich zumindest zwei Navigationssteuerungseingabepositionen, die Navigationssteuerungseingaben entsprechen, zur Bewegung eines Navigationsindikators (78) auf dem Anzeigebildschirm (72), wobei die erste Eingabeposition erlangt wird durch Drücken auf die linke Seite der kombinierten Zeichen- und Navigationstaste (66) und die zweite Eingabeposition erlangt wird durch Drücken auf die rechte Seite der kombinierten Zeichen- und Navigationstaste (66), wobei die kombinierte Zeichen- und Navigationstaste (66) ein fühlbares Einzel-Klick-Feedback an einen Benutzer vorsieht, wenn die kombinierte Zeichen- und Navigationstaste (66) auf eine der Eingabepositionen bewegt wird,
wobei in einem Texteingabemodus der Prozessor (38) programmiert ist,
- zu veranlassen, dass sich der Navigations-Indikator (78) auf dem Anzeigebildschirm (72) nach links bewegt bei einem Drücken der linken Seite der kombinierten Zeichen- und Navigationstaste (66), während das Befehlseingabesignal gleichzeitig von der Befehlstaste (68, 69) empfangen wird,
- zu veranlassen, dass sich der Navigations-Indikator (78) auf dem Anzeigebildschirm (72) nach rechts bewegt bei einem Drücken der rechten Seite der kombinierten Zeichen- und Navigationstaste (66), während das Befehlseingabesignal gleichzeitig von der Befehlstaste (68, 69) empfangen wird, und
- zu veranlassen, dass das Leerzeichen zu einem Text hinzugefügt wird, der auf dem Anzeigebildschirm (72) angezeigt wird, wenn die Leerzeichentaste in einer der erfassbaren Eingabepositionen ist und die Befehlstaste nicht gleichzeitig aktiviert wird.

2. Elektronische Vorrichtung gemäß Anspruch 1, die weiter aufweist eine dritte Eingabeposition, die durch Drücken auf ein oberes Ende der kombinierten Zeichen- und Navigationstaste (66) erlangt wird, und eine vierte Eingabeposition, die durch Drücken auf ein unteres Ende der kombinierten Zeichen- und Navigationstaste (66) erlangt wird, wobei in dem Texteingabemodus der Prozessor (38) programmiert ist,
- zu veranlassen, dass sich der Navigations-Indikator (78) auf dem Anzeigebildschirm (72) nach oben bewegt bei einem Drücken des oberen Endes der kombinierten Zeichen- und Navigationstaste (66), während das Befehlseingabesignal gleichzeitig von der Befehlstaste (68, 69) empfangen wird, und
- zu veranlassen, dass sich der Navigations-Indikator (78) auf dem Anzeigebildschirm (72) nach unten bewegt bei einem Drücken des unteren Endes der kombinierten Zeichen- und Navigationstaste (66), während das Befehlseingabesignal gleichzeitig von der Befehlstaste (68, 69) empfangen wird.

3. Elektronische Vorrichtung gemäß einem der Ansprüche 1 bis 2, wobei die Vorrichtung ein Gehäuse (62) umfasst mit einer Vorderseite (63), in der die Tastatur (32) angebracht ist, wobei die Tasten eine Vielzahl von alphanumerischen Tasten (64) aufweisen, die alphanumerischen Zeichen-Eingaben entsprechen, wobei die alphanumerischen Tasten in einer Vielzahl von Zeilen über die Vorderseite angeordnet sind, wobei die Leerzeichentaste (66) relativ zu den alphanumerischen Tasten länger ist und auf der Vorderseite unter den alphanumerischen Tasten positioniert ist.

4. Elektronische Vorrichtung gemäß Anspruch 3, wobei die elektronische Vorrichtung eine handgehaltene bzw. tragbare Vorrichtung ist und der Anzeigebildschirm (72) in der Vorderseite (63) angebracht ist.

5. Elektronische Vorrichtung gemäß einem der Ansprüche 1 bis 4, wobei die Tastatur (32) ein elastisches Element (112) umfasst, das agiert als Reaktion auf eine Bewegung der kombinierten Zeichen- und Navigationstaste (66) auf eine der Eingabepositionen zum Vorsehen des fühlbaren Einzel-Klick-Feedbacks für einen Benutzer.

6. Elektronische Vorrichtung gemäß Anspruch 5, wobei die Tastatur (32) eine Vielzahl von Schaltern (112, 114, 116) aufweist, die auf einer Leiterplatte (96) angeordnet sind, angrenzend an die Zeichen- und Navigationstaste (66), zum Erfassen einer Bewegung der Zeichen- und Navigationstaste (66) zu den Eingabepositionen, wobei die Vielzahl von Schaltern zumindest erste und zweite Schalter (114, 116) und einen zentralen Schalter (112) umfasst, der sich zwischen den ersten und zweiten Schaltern befindet, wobei die Zeichen- und Navigationstaste (66) zu der Leiterplatte (96) hin bewegbar ist und relativ zu dem zentralen Schalter (112) drehbar angebracht ist zur Aktivierung des ersten Schalters (114) und des zentralen Schalters (112) unabhängig von dem zweiten Schalter (116), wenn ein erster peripherer Bereich der Zeichen- und Navigationstaste (66) gedrückt wird, und zur Aktivierung des zweiten Schalters (116) und des zentralen Schalters (112) unabhängig von dem ersten Schalter (114), wenn ein zweiter peripherer Bereich der Zeichen- und Navigationstaste (66) gedrückt wird.

7. Elektronische Vorrichtung gemäß Anspruch 6, wobei der zentrale Schalter (112) das elastische Element umfasst und die anderen Schalter (114, 116) im Wesentlichen keine Biasing-Kraft gegen die Zeichen- und Navigationstaste (66) vorsehen.

8. Elektronische Vorrichtung gemäß einem der Ansprüche 6 bis 7, wobei der zentrale Schalter (112) ein Kuppel-Schalter ist zum Anordnen der Zeichen- und Navigationstaste (66) in einer Ruheposition, wobei die anderen Schalter (114, 116) Nicht-Kuppel-Kontaktschalter sind, die mit Abstand angeordnet sind von jeweiligen Kontaktbereichen der Zeichen- und Navigationstaste (66), wenn die Zeichen- und Navigationstaste (66) in der Ruheposition ist, wobei der zentrale Schalter (112) ein fühlbares Einzel-Klick-Feedback vorsieht, wenn durch die Zeichen- und Navigationstaste (66) in eine der Eingabepositionen gedrückt.

9. Elektronische Vorrichtung gemäß einem der Ansprüche 6 bis 8, wobei die Vielzahl der Schalter dritte und vierte Schalter (124, 126) aufweisen, wobei die ersten, zweiten, dritten und vierten Schalter symmetrisch positioniert sind um den zentralen Schalter (112), wobei die Zeichen- und Navigationstaste (66) bewegbar ist zur Aktivierung des dritten Schalters (124) und des zentralen Schalters (112) unabhängig von dem vierten Schalter (126), wenn ein dritter peripherer Bereich der Zeichen- und Navigationstaste (66) gedrückt wird, und zur Aktivierung des vierten Schalters (126) und des zentralen Schalters (112) unabhängig von dem dritten Schalter (124), wenn ein vierter peripherer Bereich der Zeichen- und Navigationstaste (66) gedrückt wird.

## Revendications

1. Dispositif électronique portable de communication mobile bidirectionnelle comportant :
un écran d'affichage (72) ;
un clavier QWERTY (32) couplé par un processeur (38) à l'écran d'affichage (72) et ayant de multiples touches alphanumériques (64, 66), une touche d'ordre (68, 69) et une touche de barre d'espacement en tant que touche combinée de caractères et de navigation (66) ;
la touche d'ordre (68, 69) étant destinée à envoyer un signal d'entrée d'ordre au processeur (38) lorsqu'elle est enfoncée dans une position activée,
la touche combinée (66) de caractères et de navigation ayant de multiples positions d'entrée pouvant être détectées comprenant au moins deux positions d'entrée de commande de navigation correspondant à des entrées de commande de navigation pour un mouvement d'un indicateur (78) de navigation sur l'écran d'affichage (72), la première position d'entrée étant obtenue en appuyant sur le côté de gauche de la touche combinée (66) de caractères et de navigation et la seconde position d'entrée étant obtenue en appuyant sur le côté de droite de la touche combinée (66) de caractères et de navigation, la touche combinée (66) de caractères et de navigation fournissant une réaction tactile unique de déclic à un utilisateur lorsque la touche combinée de caractères et de navigation (66) est amenée dans l'une quelconque des positions d'entrée,
dans lequel, dans un mode d'entrée pour la saisie d'un texte, le processeur (38) est programmé :
- pour amener l'indicateur de navigation (78) se trouvant sur l'écran d'affichage (72) à se déplacer vers la gauche lorsqu'on appuie sur le côté de gauche de la touche combinée (66) de caractères et de navigation, tandis que le signal d'entrée d'ordre est reçu simultanément de la touche d'ordre (68, 69),
- pour amener l'indicateur (78) de navigation sur l'écran d'affichage (72) à se déplacer vers la droite lorsqu'on appuie sur le côté de droite de la touche combinée (66) de caractères et de navigation tandis que le signal d'entrée d'ordre est reçu simultanément de la touche d'ordre (68, 69), et
- pour amener le caractère d'espacement à être ajouté à du texte affiché sur l'écran d'affichage (72) lorsque la touche de barre d'espacement est dans l'une quelconque des positions d'entrée pouvant être détectées et que la touche d'ordre n'est pas activée en même temps.

2. Dispositif électronique selon la revendication 1, comportant en outre une troisième position d'entrée obtenue en appuyant sur une extrémité supérieure de la touche combinée (66) de caractères et de navigation et une quatrième position d'entrée obtenue en appuyant sur une extrémité inférieure de la touche combinée (66) de caractères et de navigation, dans lequel, dans le mode de saisie de texte, le processeur (38) est programmé :
- pour amener l'indicateur de navigation (78) sur l'écran d'affichage (72) à se déplacer vers le haut lorsqu'on appuie sur l'extrémité supérieure de la touche combinée (66) de caractères et de navigation tandis que le signal d'entrée d'ordre est reçu en même temps de la touche d'ordre (68, 69), et
- pour amener l'indicateur de navigation (78) sur l'écran d'affichage (72) à se déplacer vers le bas lorsqu'on appuie sur l'extrémité inférieure de la touche combinée (66) de caractères et de naviga-tion, tandis que le signal d'entrée d'ordre est reçu en même temps de la touche d'ordre (68, 69).

3. Dispositif électronique selon l'une des revendications 1 et 2, lequel dispositif comprend un boîtier (62) ayant une face (63) dans laquelle le clavier (32) est monté, les touches comprenant de multiples touches alphanumériques (64) correspondant à des entrées de caractères alphanumériques, les touches alphanumériques étant agencées en plusieurs rangées à travers la face, la touche (66) de barre d'espacement étant allongée par rapport aux touches alphanumériques et positionnée sur la face en-dessous des touches alphanumériques.

4. Dispositif électronique selon la revendication 3, lequel dispositif électronique est un dispositif portable et l'écran d'affichage (72) est monté dans la face (63).

5. Dispositif électronique selon l'une des revendications 1 à 4, dans lequel le clavier (32) comprend un élément élastique (112) agissant en réponse à un mouvement de la touche combinée (66) de caractères et de navigation vers l'une quelconque des positions d'entrée pour fournir la réaction tactile unique de déclic à un utilisateur.

6. Dispositif électronique selon la revendication 5, dans lequel le clavier (32) comprend plusieurs commutateurs (112, 114, 116) disposés sur une plaquette (96) à circuit imprimé à proximité immédiate de la touche (66) de caractères et de navigation pour détecter un mouvement de la touche (66) de caractères et de navigation vers les positions d'entrée, les multiples commutateurs comprenant au moins des premier et deuxième commutateurs (114, 116) et un commutateur central (112) placé entre les premier et deuxième commutateurs, la touche (66) de caractères et de navigation pouvant être déplacée vers la plaquette (96) à circuit imprimé et étant montée de façon pivotante par rapport au commutateur central (112) pour activer le premier commutateur (114) et le commutateur central (112) indépendamment du deuxième commutateur (116) lorsqu'une première région périphérique de la touche (66) de caractères et de navigation est enfoncée et pour activer le deuxième commutateur (116) et le commutateur central (112) indépendamment du premier commutateur lorsqu'une deuxième région périphérique de la touche (66) de caractères et de navigation est enfoncée.

7. Dispositif électronique selon la revendication 6, dans lequel le commutateur central (112) comprend l'élément élastique et les autres commutateurs (114, 116) ne produisent pratiquement aucune force de rappel contre la touche (66) de caractères et de navigation.

8. Dispositif électronique selon l'une des revendications 6 et 7, dans lequel le commutateur central (112) est un commutateur à dôme destiné à rappeler la touche (66) de caractères et de navigation dans une position de repos, les autres commutateurs (114, 116) étant des commutateurs à contact sans dôme espacés des zones de contact respectives de la touche (66) de caractères et de navigation lorsque la touche (66) de caractères et de navigation est dans la position de repos, le commutateur central (112) fournissant une sensation tactile unique de déclic lorsqu'il est enfoncé par la touche (66) de caractères et de navigation dans l'une quelconque des positions d'entrée.

9. Dispositif électronique selon l'une des revendications 6 à 8, dans lequel les multiples commutateurs comprennent des troisième et quatrième commutateurs (124, 126), les premier, deuxième, troisième et quatrième commutateurs étant positionnés symétriquement autour du commutateur central (112), la touche (66) de caractères et de navigation pouvant être déplacée pour activer le troisième commutateur (124) et le commutateur central (112) indépendamment du quatrième commutateur (126) lorsqu'on appuie sur une troisième région périphérique de la touche (66) de caractères et de navigation et pour activer le quatrième commutateur (126) et le commutateur central (112) indépendamment du troisième commutateur (124) lorsqu'on appuie sur une quatrième région périphérique de la touche (66) de caractères et de navigation.
